# EUROPÄISCHE PATENTANMELDUNG

(11) **EP 2 174 874 A1**
(43) Veröffentlichungstag der Anmeldung: **14.04.2010**
(21) Anmeldenummer: 09012235.9
(22) Anmeldetag: 26.09.2009
(51) Int. Cl.: B65C 9/04, H02K 7/08

(54) **Maschine zum rotativen Ausrichten eines Adapterelements gegenüber einem feststehenden Maschinenteil**

(30) Priorität: 02.10.2008 DE 102008050235
(71) Anmelder: Schaeffler KG, 91074 Herzogenaurach (DE)
(72) Erfinder: Schmid, Günter, 90475 Nürnberg (DE); Schmidt, Holger, 98553 Erlau (DE); Schüler, Ralf, 98530 Wichtshausen (DE)

(57) **Zusammenfassung**

Die Erfindung betrifft eine Maschine, umfassend ein feststehendes Maschinenteil, ein gegenüber dem feststehenden Maschinenteil drehbar gelagertes Adapterelement sowie einen Elektromotor zum rotativen Ausrichten des Adapterelements gegenüber dem feststehenden Maschinenteil, wobei das Adapterelement sowie ein Rotor des Elektromotors durch eine einzige Lagerstelle drehbar gegenüber dem feststehenden Maschinenteil gelagert ist. Um eine gattungsgemäße Maschine bereitzustellen, die einen einfachen und kostengünstigen Aufbau besitzt und dennoch höhere Radialkräfte übertragen kann, als vergleichbare Maschinen aus dem Stand der Technik, wird vorgeschlagen, dass die Lagerstelle axial zwischen dem Adapterelement und dem Rotor angeordnet ist.

## Beschreibung

### Bezeichnung der Erfindung

### Maschine zum rotativen Ausrichten eines Adapterelements gegenüber einem feststehenden Maschinenteil

### Beschreibung

### Gebiet der Erfindung

Die Erfindung betrifft eine Maschine, umfassend ein feststehendes Maschinenteil, ein gegenüber dem feststehenden Maschinenteil drehbar gelagertes Adapterelement sowie einen Elektromotor zum rotativen Ausrichten des Adapterelements gegenüber dem feststehenden Maschinenteil, wobei das Adapterelement sowie ein Rotor des Elektromotors durch eine einzige Lagerstelle drehbar gegenüber dem feststehenden Maschinenteil gelagert ist.

### Hintergrund der Erfindung

Derartige Maschinen kommen in vielfältigen industriellen Anwendungen zum Einsatz, wobei in der Regel das Adapterelement ausgebildet ist, um mit Werkstücken, fertigen Produkten oder Werkzeugen verbunden zu werden. Gewünscht ist jeweils eine bestimmte, vorgegebene relative Rotation zwischen dem Adapterelement, bzw. dem mit den Adapterelement verbundenen Element, und dem feststehenden Maschinenteil.

Ein typischer Einsatz solcher Maschinen ist in der Getränkeindustrie gegeben. Eine gattungsgemäße Maschine kann hierbei als Behandlungsmaschinen für Behälter, z.B. Flaschen, Dosen oder vergleichbare Gefäße, eingesetzt werden, um mit einer entsprechenden an dem Adapterelement angeschlossenen Manipulationseinheit Behälter zu reinigen, Behälter mit einem Etikett zu versehen, Behälter mit einem Verschluss auszurüsten oder vergleichbare Behandlungsroutinen durchzuführen.

Eine weitere Anwendungsmöglichkeit gattungsgemäßer Maschinen liegt in der Productronic, z.B. zum Positionieren von Silizium-Wavern unter beispielsweise Schleif- und Poliereinrichtungen oder als sogenannte Drehtische zum Fördern der Silizium-Wavern von einer Behandlungsstation zur nachfolgenden Behandlungsstation. Möglich ist auch das Fördern und Positionieren von unbestückten und bestückten Elektronikbaugruppen (PCB, printed circuit board), Hybrid- und SMD-Baugruppen in Bestückungs- und Prüfeinrichtungen.

Denkbar ist auch der Einsatz in Werkzeugmaschinen, zum Beispiel zum Fördern und Positionieren von Werkstücken in Werkzeugmaschinen und zum Positionieren von Werkzeugen zur spanenden Bearbeitung der Werkstücke. Schließlich können gattungsgemäße Maschinen auch in Sondermaschinen, wie Montage- und Prüfautomaten, sogenannten Rundtaktautomaten, oder in der Automatisierungstechnik allgemein eingesetzt werden. Möglich ist hierbei dazugehören, das Abführen und das Fördern von Gruppen oder Einzelteilen zu, vor oder innerhalb der Sondermaschine. Im Rundtaktautomaten liegt die Aufgabe im Fördern und Positionieren von Baugruppen in Montage- und Prüfstationen als sogenannte Grund- oder Basismaschine.

Eine gattungsgemäße Maschine zum Ausrichten und Ausstatten von Gegenständen ist aus der DE 10 2004 026 755 A1 bekannt und umfasst gemäß einem dortigen ersten Ausführungsbeispiel ein topfförmiges, drehbareres Gehäuse, mit an seiner radial inneren Seite umfänglich angeordneten Magneten, wobei das Gehäuse einen Rotor darstellt, der sich um einen verdrehfest mit einem Drehtisch verbundenen Stator dreht. Das topfförmige Gehäuse der DE 10 2004 026 755 A1 ist durch ein konzentrisch zum Stator angeordnetes Drehlager, das einem Adapterelement axial gegenüberliegt, drehbar gelagert. Nachteilig bei diesem Ausführungsbeispiel der DE 10 2004 026 755 A1 ist, dass nur geringe Radialkräfte auf das Adapterelement einwirken können, da ansonsten ein zu großes Kippmoment in dem Lager entsteht bzw. alternativ das Lager relativ groß dimensioniert werden muss. Eine ebenfalls in der DE 10 2004 026 755 A1 in einem dortigen zweiten Ausführungsbeispiel offenbarte Maschine zum Ausrichten und Ausstatten von Gegenständen kann zwar höhere Radialkräfte aufnehmen, benötigt dann jedoch zwei axial beabstandete Lager und stellt somit einen komplexeren Aufbau dar.

### Aufgabe der Erfindung

Der Erfindung liegt die Aufgabe zu Grunde, eine gattungsgemäße Maschine bereitzustellen, die einen einfachen und kostengünstigen Aufbau besitzt und dennoch höhere Radialkräfte übertragen kann, als vergleichbare Maschinen aus dem Stand der Technik.

### Zusammenfassung der Erfindung

Diese Aufgabe wird erfindungsgemäß durch eine Maschine gemäß dem unabhängigen Anspruch gelöst. Demzufolge ist bei einer gattungsgemäßen Maschine die Lagerstelle axial zwischen dem Adapterelement und dem Rotor angeordnet.

Die erfindungsgemäße Maschine ermöglicht das rotative Ausrichten eines mit dem Adapterelement zu verbindenden Elements, z.B. Werkstück, Endprodukt oder Werkzeug, gegenüber einem festen Bezugspunkt, nämlich dem feststehenden Maschinenteil. Das Adapterelement ist hierzu gegenüber dem feststehenden Maschinenelement um eine Drehachse drehbar gelagert, um die auch der Rotor des rotativen Elektromotors dreht. Dabei ist der Rotor des Elektromotors und das Adapterelement koaxial angeordnet.

Um einen möglichst einfachen, insbesondere in axialer Richtung der Drehachse kurzen, Aufbau zu ermöglichen, weist die erfindungsgemäße Maschine nur eine einzige Lagerstelle sowohl für das Adapterelement als auch für den Elektromotor, das heißt den Rotor des Elektromotors, auf. Diese gemeinsame Lagerstelle für Adapterelement und Rotor überträgt somit sämtliche Radial- und Axialkräfte des Adapterelements und des Rotors. Die Lagerstelle wird den spezifischen Anforderungen, z.B. Richtung der auftretenden Axialkräfte, Größe dieser Axialkräfte bzw. Größe der auftretenden Radialkräfte, entsprechend ausgelegt.

Die Erfindung beruht auf der Erkenntnis, dass durch die axiale Positionierung der Lagerstelle nahe dem Adapterelement wesentlich höhere Radialkräfte auf das Adapterelement einwirken können, als dies bei vergleichbareren Lagerstellen, die axial weiter von dem Adapterelement entfernt positioniert sind, der Fall wäre. Dies liegt darin, dass durch die erfindungsgemäße Positionierung der Lagerstelle das auf das Lager einwirkende Kippmoment reduziert wird, indem der Hebelarm zwischen Radialkrafteinleitungspunkt und Lagerstelle verringert wird. Durch die Reduzierung des Kippmoments kann außerdem die Genauigkeit der Maschine gesteigert werden, indem mögliche Verkippungen des Adapterelements gegenüber der Drehachse vermindert werden. Somit wird nicht nur der Rotor, sondern auch das Adapterelement, präzise geführt.

Erfindungsgemäß wird somit eine hinreichend steife Lagerung ermöglicht, die selbst bei ausladenden Aufbauten eine stabile Unterstützung sicherstellt. Lagerstellen auf beiden Seiten der Rotors, wie sie aus dem Stand der Technik für hohe Radialkräfte bekannt sind, werden somit überflüssig, wodurch Kosten und Bauraum eingespart werden.

Gemäß einer Ausführungsform der vorliegenden Erfindung ist der Elektromotor ein Außenläufer. Der sich drehende Rotor des Elektromotors ist also radial außerhalb des Stators des Elektromotors angeordnet und ist mit dem Adapterelement gekoppelt. Die Kopplung zwischen Rotor und Adapterelement besteht zumindest aus einer drehfesten Verbindung. Vorteilhafterweise ist der Rotor und das Adapterelement auch axial verschiebefest gekoppelt. Denkbar ist dabei, dass der Rotor drehfest mit einem zylindrischen Gehäuse verbunden ist, welches wiederum drehfest mit dem Adapterelement verbunden ist. Das stehende Maschinenteil kann beispielsweise durch eine Welle oder einen Teil einer Welle gebildet werden.

Gemäß einer Ausführungsform der vorliegenden Erfindung ist der Elektromotor ein Innen läufer. Das feststehende Maschinenelement kann beispielsweise ein Gehäuse oder ein Teil eines Gehäuses der Maschine sein. Der Rotor ist wiederum mit dem Adapterelement zumindest drehfest und vorzugsweise axial verschiebefest gekoppelt. Der den Rotor umgebende Stator kann dabei mit einem Gehäuse drehfest verbunden sein. Insbesondere kann der Stator des Elektromotors einen Teil des Gehäuses bilden. Dadurch ist es möglich, auf Teile des Gehäuses zu verzichten, da ein Blechpaket des Stators als tragende Struktur genutzt wird. Der Stator ist somit selbsttragend und es wird ein besonders einfacher und materialsparender Aufbau ermöglicht. Diese Vorteile kommen insbesondere dann zum Tragen, wenn der Elektromotor aufgrund des benötigten Drehmoments verhältnismäßig lang baut. Der im Wesentlichen rotationssymmetrische Stator kann an seinen beiden axialen Enden mit Gehäuseelementen verbunden werden. Insbesondere kann der Stator mittels Zugschrauben axial zwischen zwei Gehäuseelementen gehalten werden. Die Zugschrauben sind dabei etwas länger als die axiale Erstreckung des Stators. In vorteilhafter Weise werden mehrere Zugschrauben umfänglich angeordnet.

Gemäß einer Ausführungsform der vorliegenden Erfindung ist der Elektromotor ein Torquemotor. Es handelt sich hierbei um einen Direktantrieb, d.h. die Motordrehzahl entspricht stets der Drehzahl des Adapterelements und es ist kein Getriebe zur Leistungsanpassung erforderlich. Durch den Entfall eines Getriebes sowie der dabei notwendigen Getriebeschmierung ergibt sich eine höhere Zuverlässigkeit der Maschine, eine höhere Sauberkeit, keine Getriebeelastizität sowie ein hochdynamischer und hochgenauer Positionierregelkreis. Vorzugsweise wird ein permanentmagneterregter Synchronmotor gewählt, der z.B. eine hohe Polpaarzahl und eine dreiphasige Drehstromregelung in Sternschaltung aufweist. Die Polpaarzahl wird durchmesserabhängig gewählt und liegt zum Beispiel im Bereich von 8 bis 80.

Gemäß einer Ausführungsform der vorliegenden Erfindung umfasst der Rotor Permanentmagnete. Der Rotor bildet also das Sekundärteil. Die Permanentmagnete sind zum Beispiel in Nuten oder Montageschablonen auf dem Rotor fixiert, zum Beispiel durch Kleben. Als Magnetwerkstoffe kommen Seltene-Erde-Materiallen, wie NdFeB oder SmCo, die ein hohes magnetisches Energieprodukt aufweisen, in Betracht. Die Form der Magnete ist im Wesentlichen rechtwinklig und/oder stabförmig. Durch die Größe der Luftspaltfläche zwischen Rotor und Stator wird das Motordrehmoment beeinflusst, so steigt das Motordrehmoment mit zunehmender Luftspaltfläche. Bei gegebenem Durchmesser des Luftspalts kann das gewünschte maximale Motordrehmoment durch eine entsprechende Wahl der Länge der Permanentmagnete, d.h. deren axialer Erstreckung, frei gewählt werden. Die Permanentmagnete sind typischerweise 25 mm lang, so dass die axiale Erstreckung des Luftspalts des Elektromotors 25 mm oder ein ganzzahliges Vielfaches davon beträgt. Der Elektromotor ist dabei modular aufgebaut, so dass die Konstruktion leicht an unterschiedliche Anforderungen angepasst werden kann.

Gemäß einer Ausführungsform der vorliegenden Erfindung umfasst der Stator elektromagnetische Spulen. Der Stator bildet also das Primärteil.

Gemäß einer Ausführungsform der vorliegenden Erfindung ist der Elektromotor mit einer Hohlwelle gekoppelt. Insbesondere ist bei einem Innenläufer der Rotor mit der Hohlwelle gekoppelt und bei einem Außenläufer der Stator mit der Hohlwelle gekoppelt. Beispielsweise kann der Rotor bzw. der Stator direkt mit der Hohlwelle drehfest verbunden sein. Vorteilhafterweise erstreckt sich die Hohlwelle zumindest vom Rotor bzw. Stator axial zum Adapterelement, insbesondere erstreckt sich die Hohlwelle dabei axial im wesentlichen entlang der gesamten Maschine. Dies stellt eine besonders einfache Form der Durchführung von Medien, Kabeln oder Schläuchen zu dem Adapterelement dar. Weiterhin kann dadurch Material und damit Gewicht des Elektromotors und je nach Bauweise auch die Massenträgheit der sich drehenden Motorenelemente reduziert werden und damit eine hohe Positionierdynamik erreicht werden.

Gemäß einer Ausführungsform der vorliegenden Erfindung kann die Lagerstelle Axialkräfte, Radialkräfte und Kippmomente aufnehmen. Denkbar ist insbesondere, dass die Lagerstelle Axialkräfte in beiden Richtungen aufnehmen kann.

Gemäß einer Ausführungsform der vorliegenden Erfindung ist die Lagerstelle mehrreihig, insbesondere zweireihig, ausgeführt. Da die Lagerstelle sämtliche Kräfte und Momente im Rahmen eines Einlagerkonzepts aufnehmen muss, ist es vorteilhaft, eine Lagerstelle mit mehreren Lagerreihen einzusetzen, da hierdurch die Tragkraft insgesamt erhöht wird und auch Kippmomente aufgenommen werden können. Denkbar ist, einen gemeinsamen Innenring bzw. einen gemeinsamen Außenring für mehrere Lagerreihen vorzusehen. Im Rahmen der Erfindung liegen aber auch mehrere separate Innenringe beziehungsweise Außenringe für die einzelnen Lagerreihen, solange die Lagerreihen axial benachbart sind, d.h. keine weiteren Elemente axial zwischen den Außenringen beziehungsweise die in Innenringen angeordnet sind.

Gemäß einer Ausführungsform der vorliegenden Erfindung wird die Lagerstelle durch ein zweireihiges Schrägkugellager gebildet. Vorteilhafterweise wird das zweireihige Schrägkugellager dabei vorgespannt und/oder weist eine O-Anordnung auf, wenngleich eine X-Anordnung selbstverständlich nicht ausgeschlossen ist. Grundsätzlich sind natürlich auch andere Lagerbauformen, wie beispielsweise Kreuzrollenlager, Radial-/Axial-Zylinderrollenlager oder Vierpunktlager, denkbar. Vorzugsweise sind die Wälzkörper in der Lagerstelle beidseitig mit schleifenden oder berührungslosen Deckscheiben oder Labyrinthdichtungen abgedeckt, um das Wälzlagerfett in den Lagern zurückzuhalten und vor einem Abfließen zu hindern.

Gemäß einer Ausführungsform der vorliegenden Erfindung entspricht der Außendurchmesser des Lagers der Lagerstelle oder der Außendurchmesser der Lager der Lagerstelle im wesentlichen dem Außendurchmesser des Rotors. Zusätzlich oder alternativ entspricht der Wälzkörperteilkreis im wesentlichen dem Luftspaltdurchmesser der Elektromotors.

Gemäß einer Ausführungsform der vorliegenden Erfindung ist ein Inkremental- und/oder Absolutmesssystem in die Maschine integriert. Dabei ist vorzugsweise eine Winkelteilung, zum Beispiel in Hohlwellenausführung, mit einem sich drehenden Maschinenteil drehfest und verwindungssteif gekoppelt. Die Kopplung kann mittelbar oder unmittelbar erfolgen. Die Winkelteilung weist eine inkrementelle oder absolute Maßverkörperung auf und kann somit in Verbindung mit einem entsprechenden Abtastkopf einen inkrementalen oder absoluten Winkelmesswert liefern. Die Abtastung der Maßverkörperung erfolgt durch entsprechende Sensoren des Abtastkopfes, z.B. optoelektronisch (Durchlicht- oder Reflektionsprinzip), magnetisch oder induktiv. Das Messsystem kann dabei als Einbaudrehgeber oder auch als Hohlwellendrehgeber ausgeführt sein. Kennzeichen des Messsystems in Hohlwellenausführung ist auch, dass dieses ohne Ausgleichskupplung und ohne eigene Lagerung an dem rotierenden Maschinenteil angekoppelt sein kann und somit im Gegensatz zu den sogenannten Einbaudrehgebern keine Ausgleichskupplung zum Ausgleich von Wellenfluchtungsfehlern benötigt, wodurch die elastische Verdrehsteifigkeit auf ein endliches Maß begrenzt wäre. Ein Absolutmesssystem ist dann zu bevorzugen, wenn die absolute Position zwischen feststehendem Maschinenteil und Adapterelement direkt nach dem Einschalten der Maschine benötigt wird und ein Referenzsuchlauf z.B. aufgrund möglicher Kollisionen nicht möglich ist. Gemäß einer bevorzugten Ausführungsform der vorliegenden Erfindung ist das Inkremental- und/oder Absolutmesssystem in ein Lager der Lagerstelle integriert. Es handelt sich hierbei um einen äußerst kompakten Aufbau.

Gemäß einer Ausführungsform der vorliegenden Erfindung umfasst die Maschine ein Zustandsüberwachungssystem. Das Zustandsüberwachungssystem kann Sensoren wie Beschleunigungssensoren und/oder Körperschallsensoren umfassen, um auftretende Lagerschäden frühzeitig erkennen zu können. Vorzugsweise ist der Sensor beziehungsweise sind die Sensoren daher in der Nähe der Lagerstelle angeordnet, insbesondere stehen sie mit einem Außenring und/oder mit einem Innenring eines Lagers in direktem Kontakt. Vorzugsweise ist der Sensor beziehungsweise sind die Sensoren mit dem feststehenden Wälzlagerring(en) verbunden, von wo der Körperschall infolge der Überrollungen der Wälzlagerlaufbahnen durch die Wälzkörper verursacht und abgestrahlt wird. In Verbindung mit einem Auswertegerät kann eine vorausschauende Planung von Wartungsvorgängen realisiert werden, wodurch die Anlagenverfügbarkeit gesteigert werden kann. Das Zustandsüberwachungssystem kann auch Temperatursensoren umfassen, die typischerweise in eine Motorwicklung des Elektromotors eingegossen sind. Denkbar ist, die Signale des Zustandsüberwachungssystems mittels einer geeigneten Datenschnittstelle zum Beispiel auch über das Internet auszulesen, wodurch eine Fernwartung ermöglicht wird.

Gemäß einer Ausführungsform der vorliegenden Erfindung umfasst die Maschine einen integrierten Lüfter. Dieser kann beispielsweise direkt mit einem sich drehenden Maschinenteil verbunden sein bzw. durch dieses angetrieben werden.

Gemäß einer Ausführungsform der vorliegenden Erfindung ist die Maschine eine Behandlungsmaschine für Behälter. Das Adapterelement ist in diesem Fall dazu ausgebildet, die jeweiligen Behälter aufzunehmen. Entsprechend kann das Adapterelement Vertiefungen und/oder Erhebungen, die zur Zentrierung der Behälter dienen, aufweisen. Im Rahmen der Erfindung liegen natürlich auch die Eingangs erwähnten Anwendungsmöglichkeiten gattungsgemäßer Maschinen.

### Kurze Beschreibung der Zeichnungen

Im Folgenden werden Ausführungsbeispiele der Erfindung anhand der beigefügten Zeichnungen beschrieben. Es zeigen:
- Fig. 1: eine erfindungsgemäße Maschine gemäß einem ersten Aus- führungsbeispiel,
- Fig. 2: eine erfindungsgemäße Maschine gemäß einem zweiten Aus- führungsbeispiel und
- Fig. 3: eine erfindungsgemäße Maschine gemäß einem dritten Aus- führungsbeispiel.

### Detaillierte Beschreibung der Zeichnung

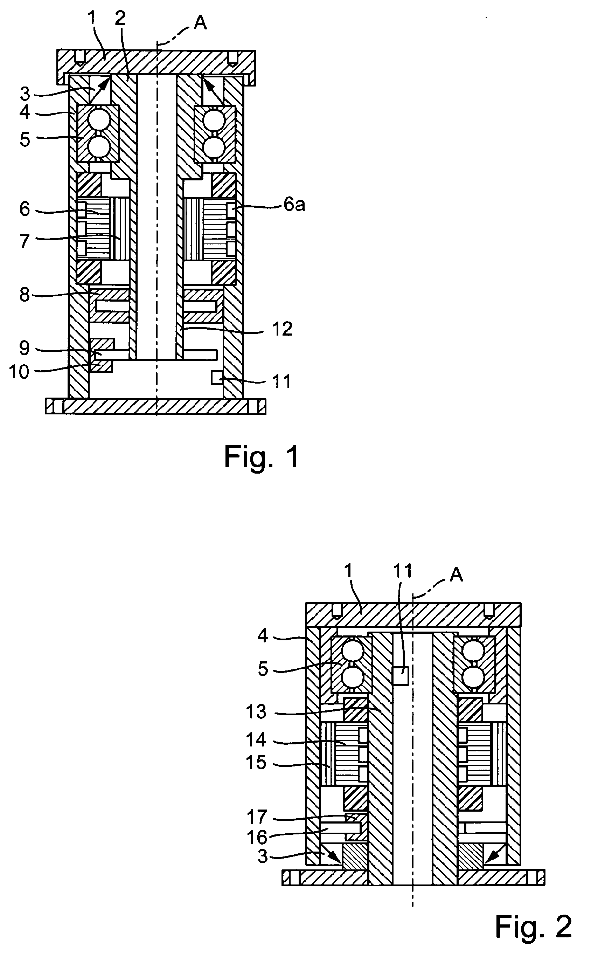

Figur 1 zeigt eine erfindungsgemäße Maschine gemäß einem ersten Ausführungsbeispiel. Adapterelement 1, z.B. ausgebildet zum Aufnehmen von Behältern, ist drehfest und verschiebefest mit einem sich drehenden Maschinenteil 2 verbunden. Diese Verbindung ist durch eine Schweißverbindung verwirklicht, alternativ könnte auch z.B. eine Schraubverbindung gewählt werden. Das sich drehende Maschinenteil 2 ist durch einen Radialwellendichtring 3 gegenüber einem feststehenden Gehäuse 4 abgedichtet. Das feststehende Gehäuse 4 bildet das erfindungsgemäße, feststehende Maschinenteil. Das feststehende Gehäuse 4, das sich drehende Maschinenteil 2 sowie das Adapterelement 1 sind im wesentlichen rotationssymmetrisch bezüglich einer Drehachse A ausgebildet. Zwischen dem sich drehenden Maschinenteil 2 und dem Gehäuse 4 ist eine Lagerstelle angeordnet, die durch ein zweireihiges Schrägkugellager 5 ausgebildet wird, das einen für beide Lagerreihen gemeinsamen Innenring und Außenring aufweist. Das zweireihige Schrägkugellager ist spielfrei und vorgespannt und kann sowohl Radial- als auch Axialbelastungen aufnehmen.

Angetrieben wird das Adapterelement 1 mittels eines Torquemotors in Innenläuferbauform, insbesondere handelt es sich hierbei um einen permanentmagneterregten, genuteten und Eisenbehafteten Synchronmotor, dessen Stator 6 drehfest mit dem Gehäuse 4 und dessen Rotor 7 drehfest mit dem sich drehenden Maschinenteil 2, mittels eines Hohlzylinders 12, verbunden ist. Der Stator 6 bildet somit das Primärteil und der Rotor 7, der Permanentmagnete trägt, bildet das Sekundärteil. Der Stator 6 ist mit Kühlnuten 6a versehen. Diese Kühlnuten 6a ermöglichen es, die entstehende Wärmeverlustleistung des Primärteils des Elektromotors mittels einer Flüssigkeit, z.B. Wasser oder Öl, oder eines Gases abzuführen.

In die Maschine ist eine eigensichere Bremse 8 integriert, die mittels Druckfedern intern vorgespannt ist, und die mittels eines Elektromagneten oder eines Pneumatikzylinders freigegeben werden kann. Somit kommt die Bremswirkung infolge der Federvorspannung bei Stromausfall, Not-Aus oder sonstigem Maschinenstopp zur Geltung, wenn die Bremsenfreigabe weder elektrisch noch pneumatisch aufgehoben wird.

Des Weiteren ist ein Inkremental- und Absolutmesssystem integriert. Dieses umfasst eine Winkelteilung 9 in Hohlwellenausführung, die unmittelbar und drehfest mit einem Hohlzylinder 12 verbunden ist, sowie einen entsprechenden Abtastkopf 10. Der Hohlzylinder 12 ist drehfest mit dem sich drehenden Maschinenteil 2 verbunden.

Die erfindungsgemäße Maschine kann beispielsweise auf sogenannten Fördersternen eingesetzt werden. Dazu werden mehrere erfindungsgemäße Maschinen umfänglich auf einem sich drehenden Drehtisch angeordnet. Vorzugsweise weist das Gehäuse 4 daher entsprechende standardisierte Verbindungselemente zum Anbringen an dem Drehtisch auf.

Erfindungsgemäß ist an dem Gehäuse 4 oder an einem anderen feststehenden Maschinenteil, jedoch vorteilhaft im inneren der Antriebsanordnung, ein so genannter Körperschallsensor 11 angebracht. Dieser kann angeschraubt, geklemmt oder angeklebt werden. Es handelt sich hierbei um einen Beschleunigungssensor, mithilfe dessen Körperschall gemessen werden kann. Vorteilhafterweise ist der Anbringungsort derart gewählt, dass eine direkte und kurze Kopplung zu dem feststehenden Wälzlagerring bzw. zu den feststehenden Wälzlagerringen ermöglicht wird. Der Körperschallsensor 11 ist mit einem nicht dargestellten Auswertegerät verbunden. Das Auswertegerät kann die Signale des Körperschallsensors 11, eines Temperatursensors (nicht dargestellt) sowie die Signale des Inkremental- und Absolutmesssystems erfassen, verarbeiten und darstellen.

Nachteilig von verschiedenen Ausführungen ist, dass diese aus Gründen der elektrischen Schutzart nicht mit Lüftungsschlitzen versehen werden können, so dass Verlustwärme, die im Primärteil des Torquemotors entsteht, durch Wärmeleitung nur schlecht abgeführt werden kann. Ohne zusätzliche Maßnahmen würde sich der Torquemotor infolgedessen stark aufheizen, wodurch wiederum die Lebensdauer des Lagers und des Elektromotors selbst reduziert wird. Eine Möglichkeit, die Erwärmung des Elektromotors zu reduzieren, ist das Einbringen von Kühlkanälen 6a in das Primärteil, also den Stator 6. Falls eine Flüssigkeitskühlung nicht realisierbar sein sollte, kann auch ein Ventilator (nicht dargestellt), der in das Gehäuse 4 eingebracht werden kann und für eine Luftumwirbelung und damit für eine zusätzliche oder alternative Kühlung sorgt, eingesetzt werden.

Figur 2 zeigt eine erfindungsgemäße Maschine gemäß einem zweiten Ausführungsbeispiel. Bezüglich gleicher Bezugszeichen wird auf die Beschreibung zur Figur 1 verwiesen.

Wesentliches Merkmal dieses Ausführungsbeispiels im Vergleich zum Ausführungsbeispiel nach Figur 1 ist, dass der Torquemotor in Außenläuferbauform ausgebildet ist. Vorteilhaft bei der Außenläuferbauform ist, dass sich bei gleichem Motorvolumen und unveränderten äußeren Abmessungen der Drehmomentbildende Luftspalt auf einem größeren Durchmesser befindet und somit ein höheres Motormoment bei gleichem Motorstrom erzeugt wird. Falls umgekehrt das gleiche Motormoment wie in dem Ausführungsbeispiel nach Figur 1 erforderlich ist, wird nur ein geringerer Motorstrom benötigt. Da die elektrische Verlustleistung, die in erster Linie in der Motorwicklung einsteht, direkt proportional zum Motorstrom ist, wird somit durch diese Bauform eine niedrigere Verlustleistung und damit eine niedrigere Motorerwärmung hervorgerufen.

Bei diesem Ausführungsbeispiel ist der Stator 15 innerhalb des Rotors 15 angeordnet, wobei der Stator 15 auch hier mit Kühlnuten versehen sein kann und fest an dem feststehenden Maschinenteil 13 angekoppelt ist, welches aus einem Werkstoff mit hoher thermischer Wärmeleitfähigkeit zur maximalen Wärmeabfuhr der Verlustwärme gefertigt sein kann. Hierfür bieten sich Werkstoffe wie Kupfer, Messing, Aluminium, Stahl 16MnCr5 oder St37 an. In diesem Ausführungsbeispiel ist der Innenring feststehend, während sich der Außenring dreht, wobei mit dem Außenring das Adapterelement 1 sowie ein rohrförmiges Gehäuse 4 drehfest gekoppelt ist. Die Winkelteilung 16 ist ebenfalls direkt am rotierenden Gehäuse 4 angeordnet und wird mittels Abtastkopf 17 nach dem oben beschriebenen Verfahren abgetastet.

Das feststehende Maschinenteil 13 kann an seiner axial dem Adapterelement 1 abgewandten Seite standardisierte Anschlusselemente zum Verbinden mit einem Drehtisch aufweisen. Eine Dichtung 3 ist an diesem axialen Ende des feststehenden Maschinenteil 13 zwischen dem Maschinenteil 13 und dem Gehäuse 4 angeordnet.

Der Körperschallsensor 11 zur Zustandsüberwachung ist in unmittelbarer Nähe des Wälzlagerinnenrings angeordnet. Vorteilhaft ist auch in diesem Ausführungsbeispiel, dass alle Energie- und Signalleitungen durch den freien Mittendurchgang auf einfache Weise nach außen geführt werden können

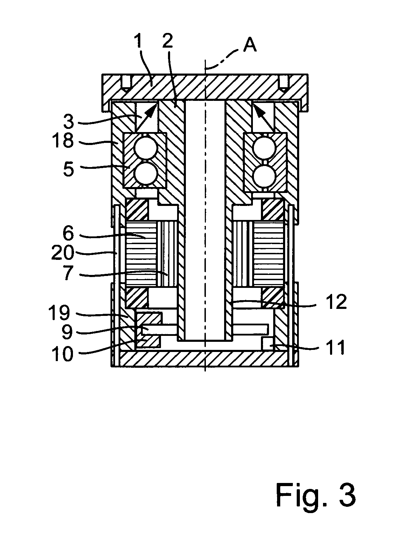

In Figur 3 ist eine erfindungsgemäße Maschine gemäß einem dritten Ausführungsbeispiel dargestellt. Bezüglich gleicher Bezugszeichen wird auf die Beschreibung zur Figur 1 und Figur 2 verwiesen.

Im Gegensatz zu den vorherigen Ausführungsbeispielen kann auf ein die komplette Maschine umfassendes, rohrförmiges Gehäuse verzichtet werden, da das Blechpaket des Stators 6 als tragende Struktur genutzt wird. Das Blechpaket ist zwischen zwei Spannplatten, die somit Gehäuseelemente 18, 19 ausbilden, mittels mehrerer um die Drehachse A umfänglich verteilten Zugschrauben 20 verschraubt bzw. verspannt. Diese Konstruktion ist insbesondere dann vorteilhaft einzusetzen, wenn keine aggressiven Medien an den Motor gelangen können und/oder wenn der Motor besonders lange ist, also wenn ein hohes Motormoment benötigt wird. Auch lassen sich durch diese Ausführungsform auf einfache Weise Motoren mit unterschiedlichem Motormoment, das heißt mit unterschiedlichen Motorlängen, fertigen. Im Gegensatz zu den Ausführungsbeispielen mit einem Gehäuse, ergibt sich außerdem eine bessere Kühlung des Primärteils des Elektromotors.

Das erfindungsgemäße, feststehende Maschinenteil wird durch die Gehäuseelemente 18, 19 gebildet.

Die restlichen Maschinenkomponenten sind entsprechend den Ausführungsbeispielen in Figur 1 beziehungsweise Figur 2 ausgeführt.

### Bezugszeichenliste

- 1: Adapterelement
- 2: drehendes Maschinenteil
- 3: Dichtung
- 4: Gehäuse
- 5: Lager
- 6: Stator
- 6a: Kühlnuten
- 7: Rotor
- 8: Bremse
- 9: Winkelteilung
- 10: Abtastkopf
- 11: Körperschallsensor
- 12: Hohlzylinder
- 13: feststehendes Maschinenteil
- 14: Stator
- 15: Rotor
- 16: Winkelteilung
- 17: Abtastkopf
- 18: Gehäuseelement
- 19: Gehäuseelement
- 20: Zugschraube

## Patentansprüche

1. Maschine, umfassend ein feststehendes Maschinenteil (4,13,18,19), ein gegenüber dem feststehenden Maschinenteil (4,13,18,19) drehbar gelagertes Adapterelement (1) sowie einen Elektromotor zum rotativen Ausrichten des Adapterelements (1) gegenüber dem feststehenden Maschinenteil (4,13,18,19), wobei das Adapterelement (1) sowie ein Rotor (7,15) des Elektromotors durch eine einzige Lagerstelle drehbar gegenüber dem feststehenden Maschinenteil (4,13,18,19) gelagert ist, **dadurch gekennzeichnet, dass** die Lagerstelle axial zwischen dem Adapterelement (1) und dem Rotor (7,15) angeordnet ist.

2. Maschine nach Anspruch 1, **dadurch gekennzeichnet, dass** der Elektromotor ein Außenläufer ist.

3. Maschine nach Anspruch 1, **dadurch gekennzeichnet, dass** der Elektromotor ein Innenläufer ist.

4. Maschine nach Anspruch 3, **dadurch gekennzeichnet, dass** ein Stator (6) des Elektromotors einen Teil eines Gehäuses der Maschine bildet.

5. Maschine nach Anspruch 4, **dadurch gekennzeichnet, dass** der Stator (6) mittels Zugschrauben (20) axial zwischen zwei Gehäuseelementen (18,19) gehalten wird.

6. Maschine nach einem der vorangegangen Ansprüche, **dadurch gekennzeichnet, dass** der Elektromotor ein Torquemotor ist.

7. Maschine nach einem der vorangegangen Ansprüche, **dadurch gekennzeichnet, dass** der Elektromotor mit einer Hohlwelle (12,13) gekoppelt ist.

8. Maschine nach einem der vorangegangen Ansprüche, **dadurch gekennzeichnet, dass** die Lagerstelle Axialkräfte, Radialkräfte und Kippmomente aufnehmen kann.

9. Maschine nach einem der vorangegangen Ansprüche, **dadurch gekennzeichnet, dass** die Lagerstelle mehrreihig, insbesondere zweireihig, ausgeführt ist.

10. Maschine nach Anspruch 9, **dadurch gekennzeichnet, dass** die Lagerstelle durch ein zweireihiges Schrägkugellager (5) gebildet wird.

11. Maschine nach einem der vorangegangen Ansprüche, **dadurch gekennzeichnet, dass** ein Inkremental- und/oder Absolutmesssystem (9,10,16,17) in die Maschine integriert ist.

12. Maschine nach Anspruch 11, **dadurch gekennzeichnet, dass** das Inkremental- und/oder Absolutmesssystem (9,10,16,17) in ein Lager (5) der Lagerstelle integriert ist.

13. Maschine nach einem der vorangegangen Ansprüche, **dadurch gekennzeichnet, dass** die Maschine Sensoren (11) zur Zustandsüberwachung umfasst.

14. Maschine nach einem der vorangegangen Ansprüche, **dadurch gekennzeichnet, dass** die Maschine einen integrierten Lüfter umfasst.

15. Maschine nach einem der vorangegangen Ansprüche, **dadurch gekennzeichnet, dass** die Maschine eine Behandlungsmaschine für Behälter ist.
